# EUROPEAN PATENT APPLICATION

(11) **EP 3 238 922 A1**
(43) Date of publication of application: **01.11.2017**
(21) Application number: 15880278.5
(22) Date of filing: 20.11.2015
(51) Int. Cl.: B29C 67/00, B33Y 30/00

(54) **APPARATUS FOR PRODUCING THREE-DIMENSIONAL MOLDED ARTICLE, COMPRISING PARTICLE TRANSFER PIPE**

(30) Priority: 27.01.2015 KR 20150012535
(71) Applicant: Fine Chemical Co., Ltd., Gimhae-si, Gyeongsangnam-do 50870 (KR)
(72) Inventor: LEE, Sung Yull, Busan 47732 (KR)
(74) Representative: Prüfer & Partner mbB Patentanwälte · Rechtsanwälte
(86) International application number: PCT/KR2015/012528
(87) International publication number: WO 2016/122098

(57) **Abstract**

The present invention relates to an apparatus for producing a desired three-dimensional molded article. In the apparatus of the present invention, molding material particles are melted and the discharge position of the molten molding material particles is controlled. The apparatus of the present invention includes an extrusion unit for three-dimensional molding where the molding material particles are melted and discharged through a nozzle, a storage container where the molding material particles to be supplied to the extrusion unit are temporarily stored, a transfer pipe as a passage through which the molding material particles stored in the storage container are transferred to the extrusion unit, and a control unit for controlling the position of the extrusion unit. The transfer pipe consists of a plurality of connected unit transfer pipes.

## Description

### Technical Field

The present invention relates to an apparatus for producing a three-dimensional molded article including a particle transfer pipe. More specifically, the present invention relates to an apparatus for producing a three-dimensional molded article that uses a transfer pipe through which small particles, such as polymer resin pellets, can be transferred without being stopped.

### Background Art

Three-dimensional (3D) printers are devices that produce three-dimensional objects by processing and stacking suitable materials such as polymers and metals in the form of liquids or powders based on designed data. Since the late 2000s, three-dimensional printing has emerged as a promising technology in the field of engines and has been increasingly used in various applications. Three-dimensional printing is employed by many manufacturers to produce various models, for example, medical manikins and household items (e.g., toothbrushes and razors), as well as automotive materials and parts.

Thermoplastics account for 40% of the total global market for 3D printing materials. Such thermoplastics are in solid forms that can be freely melted and hardened. Plastic materials for three-dimensional printers are usually used in the form of thread-like filaments. Since three-dimensional printing using plastic materials in the form of filaments requires printing devices having simple structures based on simple programs, it has the advantages of lower device prices and lower maintenance and repair costs than any other printing technology. Many three-dimensional printers using filaments are known. For example, Korean Patent No. 1346704 discloses a three-dimensional printer for the production of a multi-color product by molding. Specifically, the prior art three-dimensional printer includes a heater nozzle arranged on a frame and whose position is adjustable in the X-Y directions, a worktable whose position is adjustable in the Z direction relative to the heater nozzle, and a plurality of filament transferring units, each of which transfers a plurality of thermoplastic filaments. The three-dimensional printer further includes a nozzle body into which the filaments are individually introduced, a nozzle head from which the filaments are discharged, and a controller adapted to individually control the heater nozzle and the transfer operation of the filament transferring units.

In recent years, methods have been developed that use plastic materials in the form of raw pellets instead of plastic materials in the form of filaments. According to these methods, printing materials are easy to produce, material costs can be saved, and the choice of materials can be extended. However, the use of pellets increases the weight of an extruder. Thus, the extruder needs to be fixed to the top and is operated in such a way that a molded article rack is allowed to move three-dimensionally. This construction requires a large space for the movement of the molded article rack, which increases the size and price of a three-dimensional printer. Further, as printing proceeds, the molded article rack becomes heavy, resulting in poor printing precision.

### Detailed Description of the Invention

### Problems to be Solved by the Invention

The present invention has been made in an effort to solve the above problems, and it is an object of the present invention to provide an apparatus for producing a three-dimensional molded article that ensures a smooth transfer of meltable molding material particles to an extrusion unit, is reduced in size, and can achieve high printing precision.

### Means for Solving the Problems

An aspect of the present invention provides an apparatus for producing a desired three-dimensional molded article in which molding material particles are melted and the discharge position of the molten molding material particles is controlled, the apparatus including: an extrusion unit for three-dimensional molding where the molding material particles are melted and discharged through a nozzle; a storage container where the molding material particles to be supplied to the extrusion unit are temporarily stored; a transfer pipe as a passage through which the molding material particles stored in the storage container are transferred to the extrusion unit; and a control unit for controlling the position of the extrusion unit wherein the transfer pipe consists of a plurality of connected unit transfer pipes.

According to one embodiment of the present invention, at least one of the plurality of unit transfer pipes of the transfer pipe may be inserted into and connected to the adjacent unit transfer pipe and the length of the connection portion between the insertedly connected unit transfer pipes is adjustable.

According to a further embodiment of the present invention, latching protrusions may be formed in the connection portion between the unit transfer pipes to prevent the unit transfer pipes from slipping off.

According to another embodiment of the present invention, the diameter of the unit transfer pipe close to the storage container is preferably smaller than that of the unit transfer pipe close to the extrusion unit.

According to still another embodiment of the present invention, a flexible connector may be placed between the storage container and the transfer pipe or between the extrusion unit and the transfer pipe.

### Effects of the Invention

The apparatus for producing a three-dimensional molded article according to the present invention offers the following advantageous effects.
1. The length of the transfer pipe is adjustable because the plurality of unit transfer pipes are inserted into and coupled to each other. Therefore, the molding material particles can be readily supplied to the extrusion unit through the transfer pipe in response to a positional change of the extrusion unit even in a state in which the storage container is positionally fixed.
2. When the transfer pipe may consist of at least three connected unit transfer pipes, the maximum length of the transfer pipe is at least twice the minimum length thereof. Therefore, the movement range of the extrusion unit is increased by two times in the central portion. Also in this case, the inclination angle of the transfer pipe is maintained at 30° or greater, enabling a smooth transfer of the molding material particles through the transfer pipe without being blocked in the pipe.
3. The unit transfer pipes are arranged such that the diameter of the unit transfer pipe closer to the extrusion unit is larger. This arrangement ensures a smooth transfer of the molding material particles without being blocked in the connection portion of the transfer pipe.
4. In an embodiment, an elastic member may be provided on the connection portion between the unit transfer pipes. In this embodiment, even when the position of the extrusion unit is changed, the transfer pipe connecting the storage container to the extrusion unit can maintain its straight form. Therefore, the molding material particles can be transferred at a constant inclination by the force of gravity.
5. An easy-to-prepare polymer resin in the form of pellets is used as the molding material. This contributes to a reduction in material cost and extends the choice of the material. In addition, the size or shape of the pellets can be controlled, resulting in an improvement in the quality of the final molded article.
6. A first storage container and a second storage container may be provided to temporarily store the printing material before being fed into an extruder of the extrusion unit. The polymer resin particles are fed into the extruder through the second storage container and the first storage container is substantially fixed irrespective of whether the position of the extruder is controlled. Therefore, the position of the extruder can be controlled with improved precision and the position control unit can be provided at low cost.
7. The first storage container is designed to have a relatively large capacity compared to the second storage container. This design can increase the initial amount of the molding material loaded, facilitating continuous operation of the apparatus.
8. A sensor is installed in the second storage container connected to the extruder to detect the amount of the molding material loaded. Based on the sensed results, the molding material is supplied from the first storage container to the second storage container. Therefore, the extruder can be reduced in weight and volume, and as a result, the control means for the controlling the position of the extruder can be miniaturized. In addition, the use of the sensor leads to an improvement in control precision.
9. The position of the extruder is controlled in the x, y, and z directions. Alternatively, the position of the extruder may be controlled in the x and y directions and the position of a molded article rack is controlled in the z direction. In either case, horizontal movement of the molded article rack is not involved, contributing to a reduction in the volume of the apparatus.
10. The diameter of the extruder and the size of the molding material in the form of pellets are limited to predetermined ranges. Despite the reduced volume of the extruder, the pellets can be effectively melted in the extruder.

### Brief Description of the Drawings

Fig. 1 is a perspective view of an apparatus for producing a three-dimensional molded article according to one embodiment of the present invention.
Fig. 2 illustrates one embodiment of a transfer pipe used in an apparatus for producing a three-dimensional molded article according to the present invention.
Fig. 3 explains the correlation between the position of an extrusion unit and the length and inclination angle of a transfer pipe.
Fig. 4 illustrates one embodiment of a transfer pipe used in an apparatus for producing a three-dimensional molded article according to the present invention.
Fig. 5 illustrates embodiments of connection structures of a transfer pipe used in an apparatus for producing a three-dimensional molded article according to the present invention.
Fig. 6 explains a change in the length of a transfer pipe when an elastic member is provided in a connection portion between unit transfer pipes in accordance with one embodiment of the present invention.
Fig. 7 explains a structure in which a flexible connector is placed between a transfer pipe and a storage container in accordance with one embodiment of the present invention.
Fig. 8 illustrates a vibration generator coupled to a transfer pipe in accordance with one embodiment of the present invention.
Fig. 9 explains means for regulating the movement of molding material particles that is used to an apparatus for producing a three-dimensional molded article according to the present invention.
Fig. 10 illustrates an extrusion unit of an apparatus for producing a three-dimensional molded article according to one embodiment of the present invention.

| | | | |
|---|---|---|---|
| 100: | Apparatus for producing a three-dimensional molded article | | |
| 101: | First storage container | 102: | First storage container holder |
| 103: | First moving shaft | 104: | Second moving shaft |
| 105: | Extruder connector | 106: | Rack holder |
| 107: | Housing | 108: | Molded article rack |
| 111: | Second storage container | 112: | Extruder |
| 113: | Screw | 114: | Discharge controller |
| 115: | Moving block | 116: | Sensor |
| 117: | Heater | 118: | Discharge regulation valve |
| 119: | Nozzle | 120: | Valve |
| 121: | Vibration generator | 122: | Connector |
| 130: | Transfer pipe | 130a: | First unit transfer pipe |
| 130b: | Second unit transfer pipe | 130c: | Third unit transfer pipe |
| 130b1, 130c1: Upper latching protrusions | | | |
| 130a2, 130b2, 130c2: Lower latching protrusions | | | |
| 140: | Transfer pipe | 140a: | First unit transfer pipe |
| 140b: | Second unit transfer pipe | 140c: | Third unit transfer pipe |
| 141: | First latching protrusion | 142: | Second latching protrusion |
| 143: | Elastic member | 144: | Flexible connector |

### Mode for Carrying out the Invention

The present invention is directed to an apparatus for producing a desired three-dimensional molded article in which molding material particles are melted and the discharge position of the molten molding material particles is controlled, the apparatus including: an extrusion unit for three-dimensional molding where the molding material particles are melted and discharged through a nozzle; a storage container where the molding material particles to be supplied to the extrusion unit are temporarily stored; a transfer pipe as a passage through which the molding material particles stored in the storage container are transferred to the extrusion unit; and a control unit for controlling the position of the extrusion unit wherein the transfer pipe consists of a plurality of connected unit transfer pipes.

The apparatus of the present invention is characterized in that the storage container where the molding material particles such as polymer resin particles are loaded is fixed irrespective of whether the position of an extruder is changed. Here, it is necessary to ensure a smooth supply of the molding material particles from the storage container to the extruder. A smaller size of the extruder leads to a smaller size of the molding material particles supplied to the extruder, making it difficult to supply the particles from the storage container to the extruder without being stopped. In the case where small particles are transferred through a narrow pipe by the force of gravity, the particles are likely to be blocked in the tube. This applies particularly when the transfer pipe has a gentle slope in its middle portion.

In the apparatus of the present invention, the transfer pipe connects the storage container where the molding material particles are loaded to an extruder where the molding material is melted and discharged, and the plurality of unit transfer pipes of the transfer pipe are inserted and coupled in series with each other. Due to this design, the transfer pipe substantially maintains its straight form even when the position of the extruder is changed. When the straight form of the transfer pipe is maintained, the slope of the transfer pipe is maintained at a constant level, and as a result, the particles can be effectively prevented from being blocked in the transfer pipe.

Specific embodiments and operation of the apparatus according to the present invention will now be described with reference to the accompanying drawings.

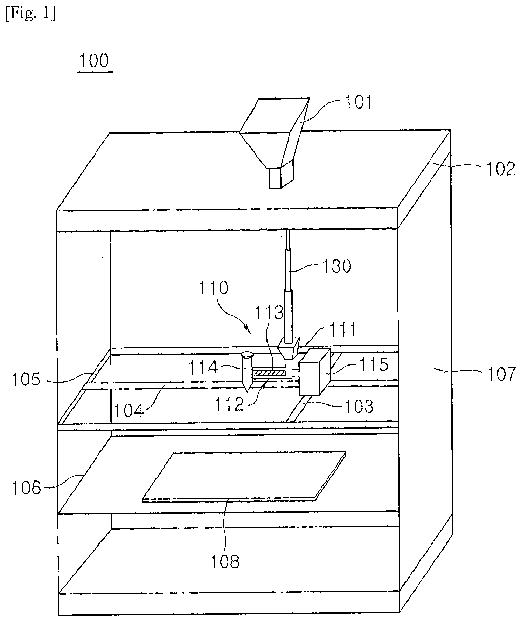

Fig. 1 is a perspective view of an apparatus for producing a three-dimensional molded article according to one embodiment of the present invention. Referring to Fig. 1, the apparatus 100 includes an extrusion unit 110, storage containers 101 and 111, and a control unit (not illustrated) for controlling the position of the extrusion unit.

In the extrusion unit 110, polymer resin particles in the form of pellets are melted and the molten polymer resin is discharged to produce a three-dimensional molded article having a desired shape. The extrusion unit 110 may include: an extruder 112 including a pipe adapted to provide a space through which the polymer resin is moved and extruded and a screw 113 inserted into the inner space of the pipe in the lengthwise direction; a nozzle 119 through which the molten polymer resin is discharged; and a discharge controller 114 adapted to control the discharge of the molten polymer resin to the nozzle.

The storage containers 101 and 111 provide spaces where the polymer resin particles are temporarily stored before being supplied to the extrusion unit 110. The second storage container 111 is coupled upstream of the extruder and the first storage container 101 continuously supplies the polymer resin particles to the second storage container 101. The first storage container 101 is connected to the second storage container 111 through a transfer pipe 130 through which the polymer resin particles can move. Since the second storage container 111 is directly coupled to the extruder 112, the positions of the second storage container 111 and the extruder 112 are controlled together. The first storage container 101 can be substantially fixedly positioned irrespective of the position of the extruder 112. The expression "substantially fixed" is intended to include both complete physical fixing of the first storage container during operation of the apparatus and a positional change of the first storage container independently of whether the position of the extruder is changed. That is, the first storage container may be positioned independently of a change in the position of the extruder. The first storage container 101 may be fixed to a first storage container holder 102. The first storage container holder may also be provided in a space separate from the extrusion unit. The second storage container 111 may have a relatively small storage capacity compared to the first storage container 101. Since the second storage container moves together with the extruder, the storage of a large amount of the polymer resin particles makes the second storage container heavy and causes a drastic change in the weight of the second storage container. Therefore, it is preferred that the second storage container has a storage capacity suitable for discharging a required amount of the polymer resin. In contrast, the first storage container should have a sufficient storage capacity for continuous operation of the apparatus. With these dimensions, control means for controlling the position of the extrusion unit can be provided at low cost and the position of the extrusion unit can be more accurately controlled.

The second storage container coupled to and moving together with the extrusion unit is optional and may be omitted. The transfer pipe 130 connecting the first storage container 101 to the second storage container 111 can move without interfering with the first storage container 101 and the second storage container 111. In the case where the second storage container is not provided, the transfer pipe 130 can connect the first storage container 101 to the inlet of the extrusion unit 110. The transfer pipe 130 may consist of a plurality of connected unit transfer pipes. Due to this construction, the transfer pipe can be extended and retracted in the lengthwise direction. The length of the transfer pipe may vary depending on the displacement of the extrusion unit. A positional change of the extrusion unit brings about a change in the connection angle between the first storage container and the transfer pipe. Thus, the first storage container may be connected to the transfer pipe using a fixable connector. Another flexible connector may be placed in a connection portion between the transfer pipe and the second storage container or between the transfer pipe and the extrusion unit. This construction permits a free change in the position of the second storage container or the extrusion unit in a state in which the first storage container is substantially fixed.

The control unit for controlling the position of the extrusion unit includes moving means adapted to displace the extrusion unit and a controller adapted to control the moving path of the extrusion unit. The position of the extrusion unit can be controlled in the x-, y-, and z-axis directions. The extrusion unit may be moved at right angles in the x-, y-, and z-axis directions. However, the movement angles of the extrusion unit are not limited to 90°. Any angles at which the extrusion unit can be moved three-dimensionally are available. Various means may be used to displace the extrusion unit. As illustrated in Fig. 1, the extrusion unit 110 is coupled to a moving block 115 and a first moving shaft 103 and a second moving shaft 104 orthogonal to each other are movably coupled to the moving block 115 so that the position of the extrusion unit can be controlled in the same plane. The first moving shaft 103 and the second moving shaft 104 may be coupled to an extruder connector 105. Although not illustrated in Fig. 1, the extruder connector may be further provided with means adapted to control the vertical position of the moving block. The moving block may be moved using means (*e.g*., a motor or a screw) moving in the lengthwise direction. Any suitable moving means known in the art may be widely used to move the moving block. As an example, there may be mentioned moving means using a rack gear and a pinion gear. The moving path of the extrusion unit can be controlled by the control unit. For example, the moving path of the extrusion unit may be controlled in such a manner that the moving block is automatically displaced along the previously input path.

According to the present invention, the control unit controls the position of the extrusion unit in the x- and y-axis directions and the position of a molded article rack, on which the polymer resin discharged from the extrusion unit is fixed to produce a molded article, in the z-axis direction. To this end, the control unit may further include means and a controller adapted to move the molded article rack in order to control the position of the molded article rack in the vertical direction. According to this construction, the position of the extrusion unit is changed in the same plane only so that a change in the length of the transfer pipe in response to a positional change of the extrusion unit can be minimized and the inclination angle of the transfer pipe can be prevented from being excessively lowered. If the molded article rack is positionally fixed and the extrusion unit needs to be displaced in the z-axis direction, the extrusion unit is displaced upward as molding proceeds gradually, and as a result, the inclination angle of the transfer pipe is lowered, making it difficult to transfer the molding material particles.

A rack holder 106 may be provided below the extrusion unit and may be coupled with a molded article rack 108. The molded article rack 108 serves as a substrate on which a molded article is produced and the rack holder 106 serves as means on which the molded article rack 108 is fixedly mounted. The molded article rack and the rack holder may be fixed irrespective of the movement of the extrusion unit 110. In the present invention, a molded article is produced in a state where the molded article rack is positionally fixed and the extrusion unit is positionally controlled, contributing to a reduction in the overall volume of the apparatus. The apparatus of the present invention may further include a housing 107 that surrounds all of the elements to protect them.

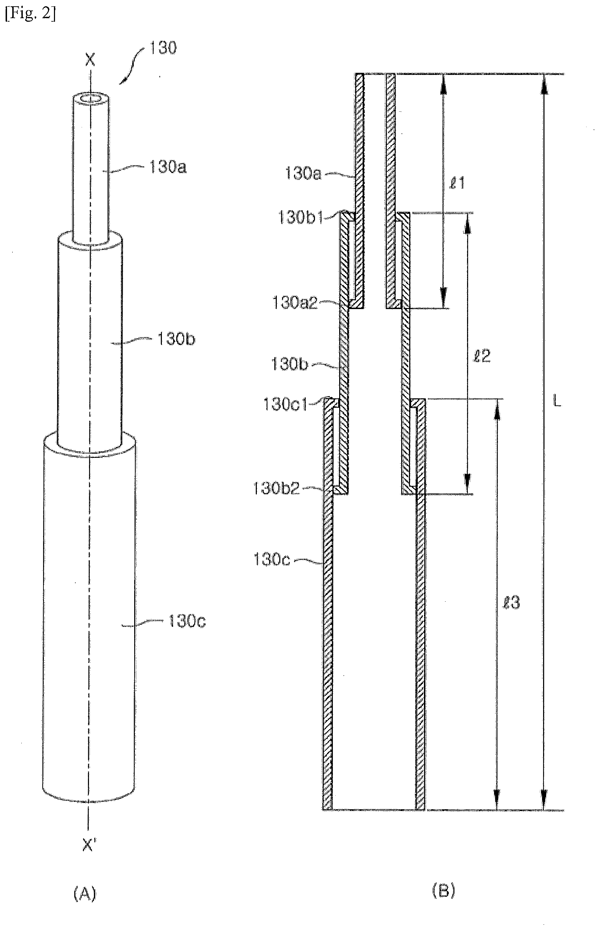

Fig. 2 illustrates one embodiment of the transfer pipe used in the apparatus of the present invention. Referring to Fig. 2, the transfer pipe 130 consists of a plurality of connected unit transfer pipes 130a, 130b, and 130c. A storage container or a flexible connector connected to the storage container may be coupled to the upper end of the first unit transfer pipe 130a. The first unit transfer pipe 130a has a lower latching protrusion 130a2 formed at the lower end thereof. The second unit transfer pipe 130b has an upper latching protrusion 130b1 and a lower latching protrusion 130b2 formed at the upper and lower ends thereof, respectively. The third unit transfer pipe 130c has an upper latching protrusion 130c1 formed at the upper end thereof. The first unit transfer pipe 130a is inserted into the second unit transfer pipe 130b. The second unit transfer pipe 130b is inserted into the third unit transfer pipe 130c. The upper latching protrusions 130b1 and 130c1 protrude inward from the bodies of the corresponding unit transfer pipes. The lower latching protrusions 130a2, 130b2, and 130c2 protrude outward from the bodies of the corresponding unit transfer pipes. The upper latching protrusions and the lower latching protrusions adjacent thereto are thick enough to come into contact with each other. Due to their protrusions, the unit transfer pipes are prevented from slipping off in a direction away from each other. Each of the upper latching protrusions is spaced a distance from the outer wall of the connected unit transfer pipe and each of the lower latching protrusions is spaced a distance from the inner wall of the connected unit transfer pipe. Here, it is advantageous that each of the latching protrusions is spaced a distance from the wall of the transfer pipe such that the transfer pipe substantially maintains its straight form over its entire length.

In this embodiment, the upper end of the first unit transfer pipe is inserted into the lower end of the second unit transfer pipe and the upper end of the second unit transfer pipe is inserted into the lower end of the third unit transfer pipe. With this arrangement, the transfer pipe has a structure in which the upper latching protrusions formed at the upper ends of the unit transfer pipes come into contact with the lower latching protrusions formed at the lower ends of the unit transfer pipes when the transfer pipe extends as a whole. This structure prevents the unit transfer pipes from slipping off. The upper end of the first unit transfer pipe is connected to the storage container and the lower end of the third unit transfer pipe is connected to the extrusion unit. Thus, all unit transfer pipes are prevented from slipping off in both extension and retraction directions.

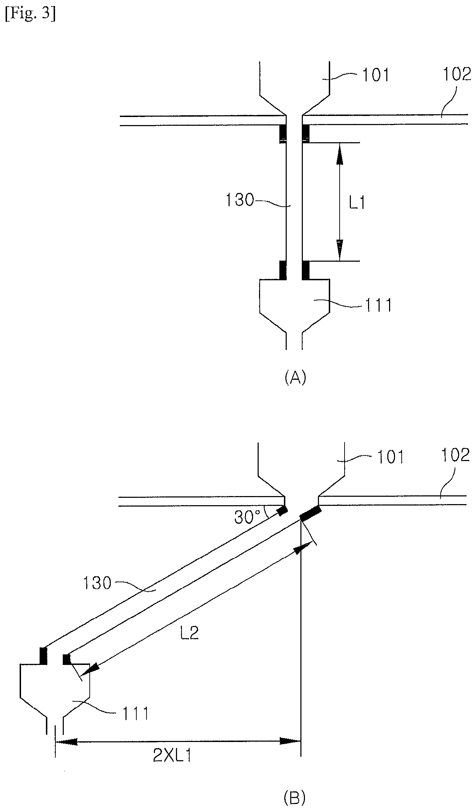

The number of the unit transfer pipes is at least 2, preferably 3, as illustrated in Fig. 2, and is associated with the maximum stretchable length of the transfer pipe, which will be explained with reference to Fig. 3. The lengths of the first (ℓ1), second (ℓ2), and third unit transfer pipes (ℓ3) are preferably the same because the ratio of the maximum extension length to the minimum retraction length of the transfer pipe reaches a maximum. In this structure, the maximum extension length of the transfer pipe may approximate 3×ℓ1 and the minimum retraction length of the transfer pipe may be ℓ1 (=ℓ2= ℓ3). That is, the maximum extension length may be almost 3-fold greater than the minimum retraction length.

Fig. 3 explains the correlation between the position of the extrusion unit and the length and inclination angle of the transfer pipe. (A) of Fig. 3 illustrates a state in which the length of the transfer pipe 130 reaches a minimum when the first storage container 101 and the extrusion unit 110 are arranged in a vertical direction. (B) of Fig. 3 illustrates a state in which the extrusion unit moves as far as possible such that the distance from the storage container reaches a maximum and the length of the transfer pipe also reaches a maximum. Here, it is assumed that the extrusion unit moves in the same plane only and the molded article rack moves in the vertical direction. It is preferred that the inclination angle of the transfer pipe exceeds 30° for the movement of the molding material particles in the transfer pipe by the force of gravity. If the transfer pipe is inclined at an angle of less than 30°, a smooth transfer of the molding material from the storage container to the extrusion unit through the transfer pipe is not ensured, and as a result, the transfer pipe may be clogged by the molding material. The length of the transfer pipe at an inclination angle of 30° is 2-fold (2L1) greater than the minimum length of the transfer pipe (L1). To this end, it is preferred that the number of the unit transfer pipes of the transfer pipe having the structure illustrated in Fig. 2 is at least 3.

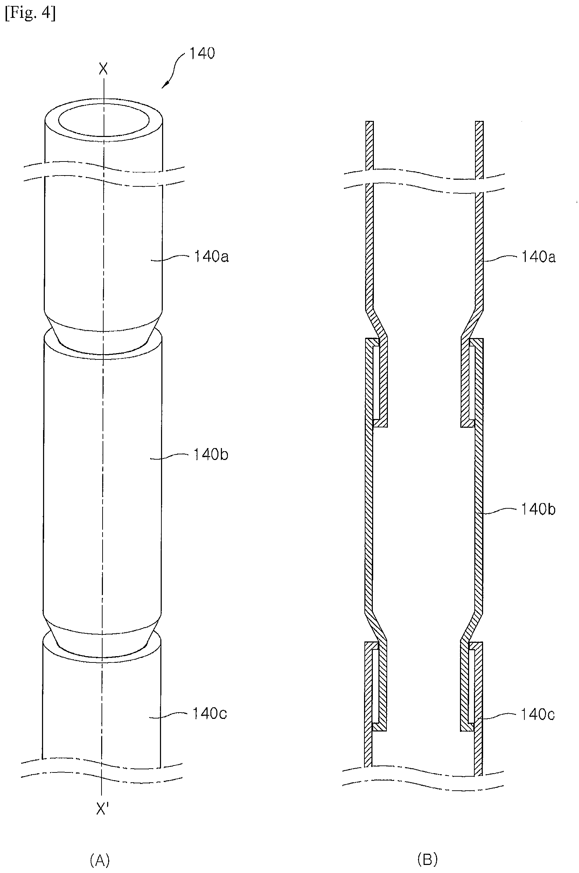

Fig. 4 illustrates one embodiment of the transfer pipe used in the apparatus of the present invention. In Fig. 4, (A) illustrates an appearance of a portion of the transfer pipe and (B) illustrates a cross-section taken along line X-X' of (A). Referring to Fig. 4, the transfer pipe 140 consists of connected unit transfer pipes 140a, 140b, and 140c. The number of the unit transfer pipes is limited to 3 in Fig. 4 but may vary depending on such factors as the distance between the first storage container and the extrusion unit and the diameter of the transfer pipe. In the transfer pipe 140 consisting of the plurality of connected unit transfer pipes 140a, 140b, and 140c, the first unit transfer pipe 140a may be inserted into and connected to the adjacent second unit transfer pipe 140b. The insertion depth of the unit transfer pipe into the adjacent unit transfer pipe may affect the overall length of the transfer pipe 140.

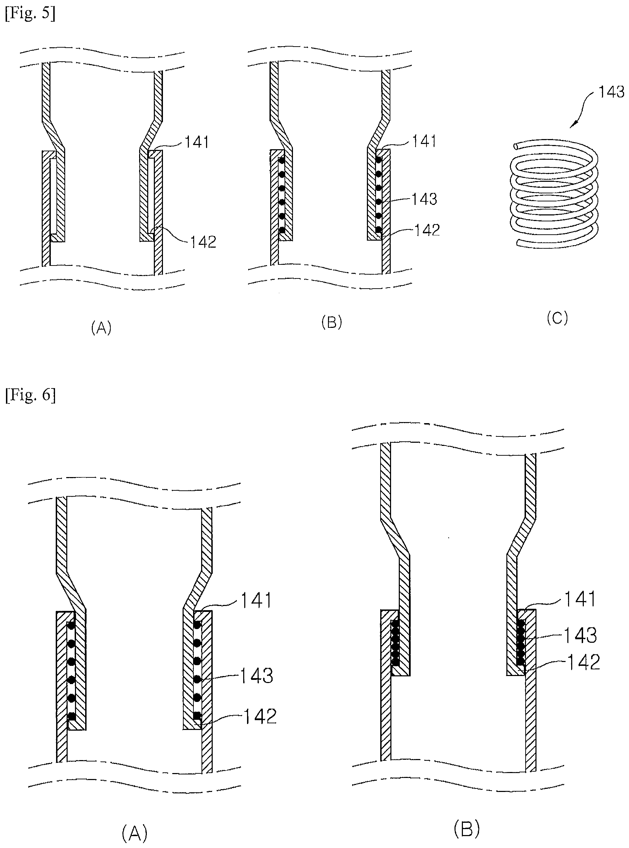

Fig. 5 illustrates embodiments of connection structures of the transfer pipe used in the apparatus of the present invention. Referring to (A) of Fig. 5, the overlying first unit transfer pipe is inserted into and coupled to the underlying second unit transfer pipe, the first unit transfer pipe has a second latching protrusion 142 extending from the lower end thereof, and the second unit transfer pipe has a first latching protrusion 141 extending inward from the upper end thereof. Although Fig. 5 illustrates the first latching protrusion and the second latching protrusion extending from the end portions of the second unit transfer pipe and the first unit transfer pipe, respectively, the first latching protrusion and the second latching protrusion may be formed in any portions in the lengthwise directions of the corresponding unit transfer pipes so long as the first unit transfer pipe and the second unit transfer pipe can be prevented from slipping off when the latching protrusions come into direct contact with each other. In this embodiment, the length of the transfer pipe through which the molding material particles can be transferred is adjusted depending on the distance between the first storage container and the extrusion unit, which is changed in response to a positional change of the extrusion unit. Since the length adjustment of the transfer pipe is easier than the deformation of the transfer pipe in the bending direction, it is easy for the transfer pipe to maintain its straight form even during the length adjustment. Referring to (B) of Fig. 5, an elastic member 143 is inserted into a space between the first latching protrusion 141 and the second latching protrusion 142. The elastic member 143 is preferably provided such that the first latching protrusion 141 and the second latching protrusion 142 are pushed against each other. It is preferred that when no external force is applied, the length of the transfer pipe is shorter than the minimum connection distance between the first storage container and the extrusion unit which is advantageous in maintaining the straight form of the transfer pipe connecting the first storage container to the extrusion unit. Referring to (C) of Fig. 5, the elastic member 143 may be an elastic spiral spring. Although not illustrated in this figure, a rubber band or a lengthwise spring may be applied to make the connection portion of the unit transfer pipes elastic and extensible. In this construction, the unit transfer pipe is inserted into and coupled to the adjacent unit transfer pipe and the rubber band or lengthwise spring surrounds the unit transfer pipes. When the connected unit transfer pipes are moved away from each other, the rubber band or spring are stretched with elasticity and the transfer pipe is prone to elastic deformation with increasing length. In the structure illustrated in Fig. 5, the elastic deformation may be the compression of the elastic member. In a structure using a rubber band, the elastic deformation may be the stretching of the elastic member. In both cases, the transfer pipe undergoes elastic deformation with increasing length. In a structure in which a rubber band or a spring surrounds the unit transfer pipes, connectors may be further disposed on the outer surfaces of the unit transfer pipes to couple the rubber band or spring to the unit transfer pipes.

The embodiment illustrated in (A) of Fig. 5 is advantageous when a relatively small number of the unit transfer pipes are provided. In the case where a small number of the unit transfer pipes are provided, the unit transfer pipes are not likely to deform in the bending direction even when retracted. Accordingly, the transfer pipe easily maintains its straight form even without an elastic member. In the case where the connection portion where the unit transfer pipe is inserted into the adjacent unit transfer pipe is sufficiently long, the unit transfer pipes are prevented from slipping off even when the distance between the first storage container and the extrusion unit reaches a maximum, thus avoiding the need to form latching protrusions in the unit transfer pipes. The embodiment illustrated in (B) of Fig. 5 is advantageous when a relatively large number of the unit transfer pipes are provided. In the case where a relatively large number of the unit transfer pipes are provided, clearances in the connection portions between the unit transfer pipes may lead to deformation of the transfer pipe in the bending direction but the elastic member enables the transfer pipe to maintain its straight form during retraction or extension of the transfer pipe.

When the straight form of the transfer pipe is maintained despite a positional change of the extrusion unit, the transfer pipe can be effectively prevented from being clogged by the molding material particles. If a portion of the transfer pipe has a gentle slope, the transfer of the particles in the portion by the force of gravity may be impeded. It is thus important to maintain the straight form of the transfer pipe in order to ensure a smooth transfer of the particles and prevent the transfer pipe from being clogged by the particles.

Fig. 6 explains a change in the length of the transfer pipe when the elastic member is provided in the connection portion between the unit transfer pipes in accordance with one embodiment of the present invention. Referring to Fig. 6, when the extrusion unit and the first storage container are moved away from each other, the elastic member 143 is compressed. As a result, the length of the connection portion between the unit transfer pipes decreases and the overall length of the transfer pipe increases ((A)→(B)),

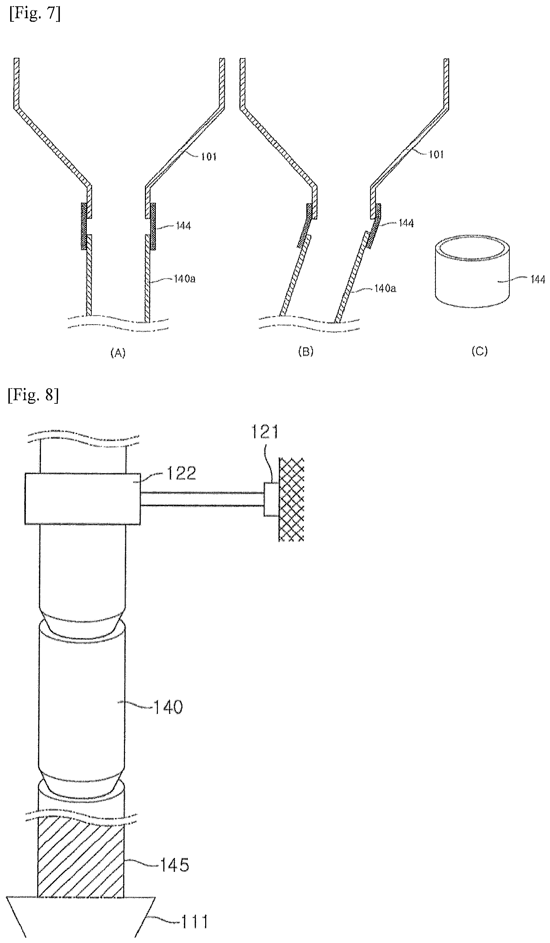

Fig. 7 explains a structure in which a flexible connector is placed between the transfer pipe and the storage container in accordance with one embodiment of the present invention. Referring to Fig. 7, a flexible connector 144 may be provided between the first storage container 101 and the first unit transfer pipe 140a. The flexible connector 144 may be, for example, a rubber tube, a corrugated pipe or a pipe having a rotatable shaft structure. The flexible connector 144 allows the transfer pipe to be inclined when the horizontal positions of the first storage container and the extrusion unit are changed in response to the displacement of the extrusion unit. (A) of Fig. 7 illustrates a structure in which the extrusion unit is placed in a vertical position under the first storage container 101 and the transfer pipe stands vertically. (B) of Fig. 7 illustrates a structure in which the positions of the first storage container 101 and the extrusion unit in the horizontal direction are changed in response to a positional change of the extrusion unit. Here, the flexible connector 144 is deformed and the first unit transfer pipe 140a is inclined in the vertical direction. The flexible connector 144 may be an elastic tube having a predetermined length, as illustrated in (C) of Fig. 7. The first storage container may be connected to the flexible connector or the flexible connector may be connected to the first unit transfer pipe through suitable means, such as an adhesive, a bolt or a connection cable. Although not illustrated, a flexible connector may be placed in the connection portion between the extrusion unit and the transfer pipe or between the second storage container and the transfer pipe.

Fig. 8 illustrates a vibration generator coupled to the transfer pipe in accordance with one embodiment of the present invention. Referring to Fig. 8, the transfer pipe 140 provides a passage through which polymer resin particles can move. Since the transfer pipe 140 is connected to the extrusion unit movable in the x, y, and z-axis directions or x- and y-axis directions, its length is changed in response to the movement range of the extrusion unit. The movement of the polymer resin particles through the transfer pipe 140 may be impeded for the following reasons. First, static electricity may be generated on the surface of polymer resin particles in the form of small pellets. Further, a gentle slope of the transfer pipe cannot ensure a smooth movement of the polymer resin particles. To solve this problem, vibration may be applied to ensure smooth movement of the polymer resin particles through the transfer pipe 140. A connector 122 surrounds a portion of the surface of the transfer pipe 140 and a vibration generator 121 as a vibration source may be spaced a distance from the connector. Vibration generated from the vibration generator 121 can be delivered to the connector 122 connected to the vibration generator 121. The delivered vibration causes the transfer pipe 140 to vibrate, ensuring smooth movement the polymer resin particles through the transfer pipe. The second storage container 111 may be connected to a flexible pipe 145 that is made of a more flexible material or structure than the transfer pipe 140. The flexible pipe can block the delivery of the vibration from the transfer pipe 140 to the second storage container 111 to prevent the extrusion unit from vibrating. The flexible pipe 145 may be the flexible connector connecting the transfer pipe to the extrusion unit. A conductive layer may be formed on the inner surface of the transfer pipe. Static electricity may be generated from the polymer resin particles moving through the transfer pipe. Grounding of the conductive layer formed on the inner surface of the transfer pipe enables the removal of the charges of static electricity to prevent the polymer resin particles from adhering to the inner surface of the flexible pipe.

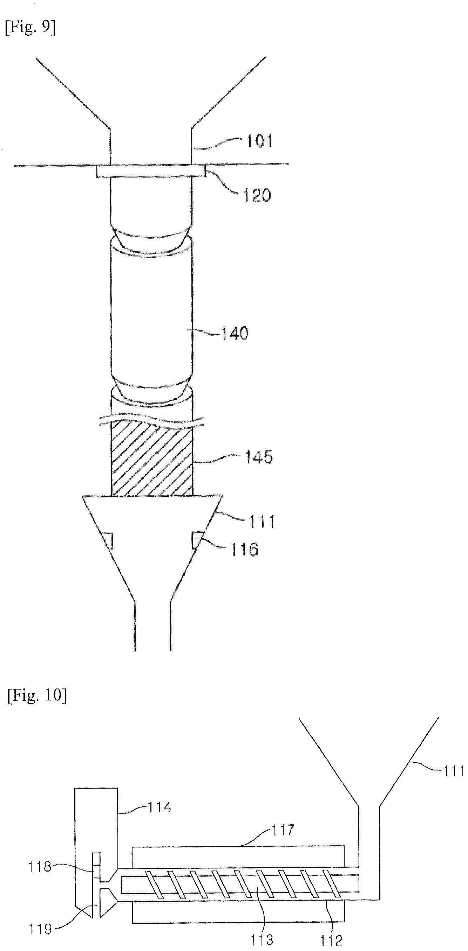

Fig. 9 explains means for regulating the movement of the molding material particles that is used to the apparatus of the present invention. Referring to Fig. 9, the polymer resin particles stored in the first storage container 101 may be sent to the second storage container 111 through the transfer pipe 140. A sensor 116 may be installed in the second storage container 111. The sensor 116 detects the amount of the printing material in the second storage container so that the amount of the polymer resin particles fed into the second storage container 111 can be regulated. The second storage container coupled to and moving with the extrusion unit may be omitted. In this case, a sensor may be installed at the entrance of the extrusion unit to detect the amount of the printing material. The sensor may be a photosensor including a light emitter and a light receiver. Various other sensing means may be applied to detect the amount of the printing material. The amount of the polymer resin particles fed may be regulated by a valve 120 installed at the point where the first storage container 101 and the transfer pipe 140 meet. Alternatively, the valve 120 may be installed in the first storage container or the transfer pipe 140. The sensor and the valve control the amount of the polymer resin particles temporarily stored in the second storage container or the extrusion unit such that a physical load necessary for controlling the position of the extrusion unit can be reduced. The amount of the polymer resin temporarily stored in the second storage container can also be maintained at a constant level by the sensor and the valve, resulting in more accurate position control of the extrusion unit.

Fig. 10 illustrates the extrusion unit of the apparatus according to one embodiment of the present invention. Referring to Fig. 10, the polymer resin particles fed into the second storage container 111 are supplied to the extruder 112. A heater 117 surrounds the extruder to melt the polymer resin particles. The polymer resin particles are melted in the extruder and are discharged to the outside through the nozzle 119. A discharge regulation valve 118 is installed in the discharge controller 114 connected to the nozzle 119 to turn the nozzle on/off or control the area of the path through which the molten polymer resin moves so that the amount of the molten polymer resin discharged can be regulated. The discharge controller may include a controller adapted to actuate the discharge regulation valve based on previously input information. The polymer resin may be a thermoplastic polymer, for example, polylactic acid (PLA), acrylonitrile butadiene styrene (ABS) or high density polyethylene (HDPE). The polymer resin particles may also be used in combination with organic particles, metal particles or composite particles. The polymer resin particles may be in the form of pellets whose diameter is preferably in the range of 0.1 to 50 mm. If the size of the pellets is smaller than 0.1 mm, powder may fly off during handling of the pellets or static electricity may be generated to impede the supply of the pellets. Meanwhile, if the size of the pellets exceeds 30 mm, the pellets may not be sufficiently melted while passing through the extruder. The diameter of the pellets is more preferably in the range of 0.3 to 20 mm. The pellets may be cylindrical in shape. In this case, the length of the pellets is preferably 0.5 to 5 times larger than its diameter. Alternatively, the molding material particles have a spherical shape. In this case, the diameter of the particles is preferably in the range of 0.1 to 50 mm, more preferably 0.3 to 20 mm. The size of the pellets appropriate for melting is associated with the screw diameter of the extruder. A small diameter of the screw leads to a decrease in the weight and volume of the extruder. Considering the preferred size of the pellets mentioned above, the screw diameter of the extruder is preferably in the range of 1 to 50 mm, more preferably 2 to 20 mm. The screw length is preferably 2 to 30 times larger than the screw diameter.

The apparatus of the present invention is characterized in that the second storage container is provided upstream of the extruder. One function of the second storage container is to enable continuous molding. At least one of the plurality of unit transfer pipes of the transfer pipe is inserted into and connected to the adjacent unit transfer pipe. Due to this construction, the length of the connection portion between the insertedly connected unit transfer pipes is adjustable. According to the construction of the transfer pipe, the length of the transfer pipe is changed while maintaining its straight path with varying distances between the first storage container and the extruder.

The molding material particles are intermittently transferred from the first storage container to the second storage container. In the case where the molding material particles are continuously supplied from the first storage container to the second storage container, the length of the transfer pipe may be difficult to control because the molding material particles filled in the transfer pipe flow back toward the storage container against the force of gravity upon retraction of the transfer pipe. In contrast, an intermittent transfer of the molding material particles from the first storage container to the second storage container facilitates control over the length of the transfer pipe because the transfer pipe may be empty during movement of the extruder. If the second storage container is not provided upstream of the extruder, the amount of the molding material particles in the extruder may not be sufficient, making it difficult to continuously mold the molding material particles. In contrast, the molding material particles stored in the second storage container can be supplied for continuous molding in the extruder.

Although the spirit of the present invention has been described herein with reference to the foregoing embodiments, those skilled in the art will appreciate that various changes and modifications can be made to the embodiments without departing from the essential features of the present invention. Therefore, the embodiments are to be considered illustrative and are not to be considered as limiting the spirit and scope of the present invention. The scope of the present invention should be determined by the appended claims and all changes which come within the meaning and range of equivalency of the claims are to be embraced within their scope.

## Claims

1. An apparatus for producing a desired three-dimensional molded article in which molding material particles are melted and the discharge position of the molten molding material particles is controlled, the apparatus comprising: an extrusion unit for three-dimensional molding where the molding material particles are melted and discharged through a nozzle; a storage container where the molding material particles to be supplied to the extrusion unit are temporarily stored; a transfer pipe as a passage through which the molding material particles stored in the storage container are transferred to the extrusion unit; and a control unit for controlling the position of the extrusion unit wherein the transfer pipe consists of a plurality of connected unit transfer pipes.

2. The apparatus according to claim 1, wherein at least one of the plurality of unit transfer pipes of the transfer pipe is inserted into and connected to the adjacent unit transfer pipe and the length of the connection portion between the insertedly connected unit transfer pipes is adjustable.

3. The apparatus according to claim 1, wherein latching protrusions are formed in the connection portion between the unit transfer pipes to prevent the unit transfer pipes from slipping off.

4. The apparatus according to claim 2, wherein the diameter of the unit transfer pipe close to the storage container is smaller than that of the unit transfer pipe close to the extrusion unit.

5. The apparatus according to claim 1, wherein a flexible connector is placed between the storage container and the transfer pipe or between the extrusion unit and the transfer pipe.
